## Europäisches Patentamt

## European Patent Office

## Office européen des brevets

(19)

(11) Numéro de publication: **0 256 926**
**B1**

(12)

# FASCICULE DE BREVET EUROPEEN

(45) Date de publication du fascicule du brevet:
**10.10.90**

(51) Int. Cl.⁵: **B65G 17/00**, B65G 19/02

(21) Numéro de dépôt: **87401796.5**

(22) Date de dépôt: **31.07.87**

(54) **Convoyeur du genre à accumulation.**

(30) Priorité: **31.07.86 FR 8611099**

(43) Date de publication de la demande:
**24.02.88 Bulletin 88/8**

(45) Mention de la délivrance du brevet:
**10.10.90 Bulletin 90/41**

(84) Etats contractants désignés:
**BE DE ES FR GB IT LU NL SE**

(56) Documents cités:
**EP-A- 0 190 950**
**DE-A- 3 029 620**
**US-A- 4 431 102**

(73) Titulaire: **S G I E INDUSTRIES S.A., 81-85 rue Ampère,
F-93330 Neuilly-sur-Marne(FR)**

(72) Inventeur: **WACK, André, 7, rue de la Ferme,
F-77480 Serbonne par Crecy-la-Chapelle(FR)**
Inventeur: **COSSET, André, 5, rue Claude Lebret,
F-93460 Gournay s/Marne(FR)**

(74) Mandataire: **CABINET BONNET-THIRION, 95 Boulevard
Beaumarchais, F-75003 Paris(FR)**

ACTORUM AG

## Description

La présente invention concerne un convoyeur selon le préambule de la revendication 1. Un convoyeur de ce genre est connu, notamment par le document EP-A 190 950.

On sait en effet que les convoyeurs de ce genre comprennent essentiellement deux chaînes sans fin de traction qui passent sur des tambours de roues dentées d'extrémité, formant tambour et une série de plateaux couramment appelés navettes qui sont adaptées à être entraînées par lesdites chaînes.

Dans ce but, les navettes sont équipées de deux paires de roues dentées moulées à rotation libre, et qui sont adaptées à engrener avec les chaînes précitées.

Le montage à rotation libre des roues dentées permet de stopper les bavettes à un quelconque poste, où l'on peut procéder à des interventions telles que chargement, déchargement, sans qu'il soit nécessaire d'interrompre l'entraînement des chaînes de traction, étant entendu que lorsqu'une navette est immobilisée -par tous moyens connus en soi- à un poste prévu sur le convoyeur ce sont les roues dentées qui, entraînées par les chaînes de traction tournent sur elles-mêmes autour de leurs axes respectifs.

Après effacement des moyens d'immobilisation, le poids de la navette et un certain coefficient de frottement dans les paliers des roues dentées assurent son entraînement automatique.

Actuellement, dans les convoyeurs du genre considéré, les navettes ne sont donc pas assujetties aux chaînes de traction, il s'ensuit que dans la zone des secteurs circulaires d'extrémité il est indispensable que les navettes en cause soient entraînées positivement à défaut de quoi elles ne seraient pas aptes à franchir lesdites zones semi-circulaires qu'il s'agisse du passage des navettes du brin supérieur au brin inférieur (cheminement descendant) et vice versa (cheminement montant).

De manière connue, l'entraînement positif dans les zones semi-circulaires précitées est réalisé par l'aménagement – dans ces zones – d'un tronçon de chaîne qui est guidé et solidarisé à des points fixes à ses extrémités, ledit tronçon de chaîne étant disposé concentriquement aux roues dentées formant tambour d'entraînement mais à distance de ceux-ci pour permettre le passage et l'engrènement des roues dentées associées aux navettes.

De telles dispositions assurent donc l'entraînement des navettes avec possibilité d'arrêt de celles-ci sur les tronçons rectilignes du convoyeur, tandis que, aux zones semi-circulaires d'extrémité, les navettes en cause sont entraînées de manière positive c'est-à-dire sans possibilité d'arrêt.

Il résulte des dispositions connues une réalisation complexe dans les zones semi-circulaires d'extrémité qui se répercute sur le coût du produit fini; il en résulte aussi une sécurité laissant à désirer du fait même qu'il y a impossibilité de stopper les navettes dans les zones en question.

La présente invention a pour objet un convoyeur à accumulation dénué des inconvénients succinctement rappelés ci-avant.

Le convoyeur à accumulation selon l'invention est du genre comportant une pluralité de navettes entraînées au moyen d'au moins une chaîne de traction sans fin s'enroulant sur des tambours dentés d'extrémité, les navettes étant équipées d'une première paire et d'une seconde paire de roues dentées montées chacune libre en rotation sur un arbre transversal et aptes à engrener avec lesdites chaînes de traction et de galets pour leur support par coopération avec des chemins de roulement prévus à cet effet, lesdites navettes étant ainsi, le long des tronçons rectilignes du convoyeur, immobilisables à volonté les roues dentées tournant folles, tandis que dans les zones d'extrémité semi-circulaires des moyens additionnels sont prévus pour entraîner positivement les navettes, et il se caractérise en ce que lesdits moyens additionnels résultent de ce que chaque navette est équipée sur sa sous-face de moyens de patins qui, par réaction des galets amenés en butée sur une piste sont aptes à exercer un effort de pression sur au moins un anneau de contact élastiquement déformable monté sur un support annulaire rotatif dont l'axe de rotation est commun à celui du tambour d'extrémité denté correspondant, et en ce que chaque navette comporte sur sa sous-face une première et une seconde paires de bossages saillants disposés de part et d'autre d'un plan de symétrie transversal par rapport à la direction de déplacement des navettes, lesdits bossages constituant ses moyens de patins.

Certes, dans le document US-A 4 431 102, chaque navette est équipée sur sa sous-face de moyens de patin qui, par réaction de galets sur une piste, sont aptes à exercer un effort de pression sur au moins un anneau de contact élastiquement déformable monté sur un support annulaire rotatif dont l'axe de rotation est commun à celui du tambour d'extrémité denté correspondant.

Mais, dans ce document US-A 4 431 102, chaque navette ne porte sur l'anneau de contact qu'en un seul point, il n'en est pas de même dans le convoyeur suivant l'invention, dans lequel, au contraire, chaque navette porte sur l'anneau de contact en deux points circonférentiellement espacés l'un de l'autre le long de celui-ci.

Il en résulte, avantageusement, une plus grande sûreté de fonctionnement.

Selon une caractéristique de l'invention, les surfaces terminales libres des bossages des navettes sont crénelées suivant une direction transversale, et elles forment aussi un rayon sensiblement égal à celui de l'anneau sur lequel elles s'appuient.

Selon une autre caractéristique de l'invention, les zones semi-circulaires d'extrémité sont équipées de pistes également semi-circulaires sur lesquelles prennent appui les galets des navettes lorsque l'anneau semi-rigide est en prise avec les bossages.

On observe que les dispositions suivant l'invention anneaux, bossages, pistes, – prises en combinaison – permettent un entraînement des navettes dans les zones semi-circulaires d'extrémité qui est à la fois positif, mais qui permet néanmoins si le besoin se fait sentir une immobilisation de la navette dans ladite zone sans pour autant qu'il soit nécessaire. de stopper le cheminement des chaînes de traction.

Les dispositions proposées étant de réalisation simple, les coûts sont abaissés comparativement à la technique actuelle.

En outre, un avantage non négligeable est obtenu pour ce qui concerne la sécurité; en effet, les zones semi-circulaires d'extrémité des convoyeurs étant des zones à risques, du fait même de l'entraînement positif des navettes, les risques d'accident jusqu'ici inconnus sont pratiquement supprimés du fait que les navettes s'immobilisent d'elles-mêmes si elles rencontrent un obstacle dont la résistance dépasse un seuil déterminé.

Dans sa partie centrale, l'ossature du bâti du convoyeur comporte des tronçons rectilignes définissant des chemins de roulement sur lesquels roulent les galets montés aux extrémités des arbres des navettes qui supportent au moins une roue dentée entraînée en rotation par une chaîne de traction.

Selon un autre aspect de l'invention, chaque tronçon rectiligne est constitué par un tronçon de profilé, obtenu par moulage, qui délimite, d'une part, des chemins de roulement et de guidage pour les galets des navettes, et d'autre part, des chemins de guidage pour la chaîne de traction associée.

Il en résulte un système d'entraînement amélioré et plus fiable, notamment en évitant que les chaînes de traction ne forment une flèche entre les deux tambours d'extrémité qui les supportent.

D'autres caractéristiques et avantages de l'invention ressortiront d'ailleurs de la description qui va suivre donnée à titre d'exemple en référence aux dessins annexés dans lesquels :

la figure 1 illustre en perspective un convoyeur du genre à accumulation conformément à l'invention ;

la figure 2 est une vue en coupe transversale d'une extrémité du convoyeur tel qu'indiqué par le ligne II-II à la figure 1 ;

la figure 3 est également une vue en coupe suivant une ligne III-III indiquée à la figure 2.

la figure 4 est une vue en coupe transversale partielle suivant la ligne IV-IV de la figure 1 pour illustrer la structure des tronçons rectilignes du bâti du convoyeur qui supportent et guident les navettes dans leur déplacement, et

la figure 5 est une vu en coupe partielle selon la ligne V-V de la figure 4.

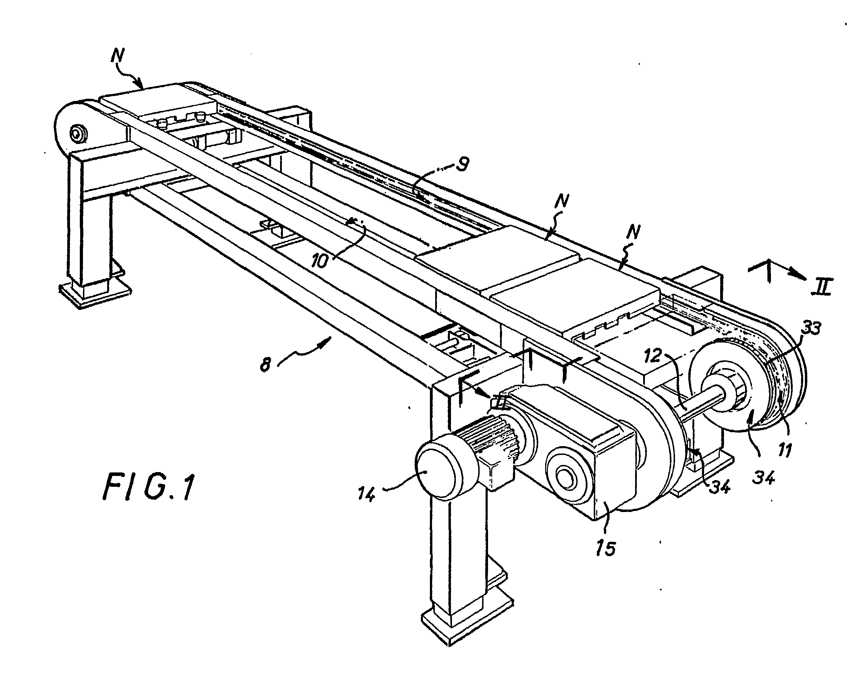

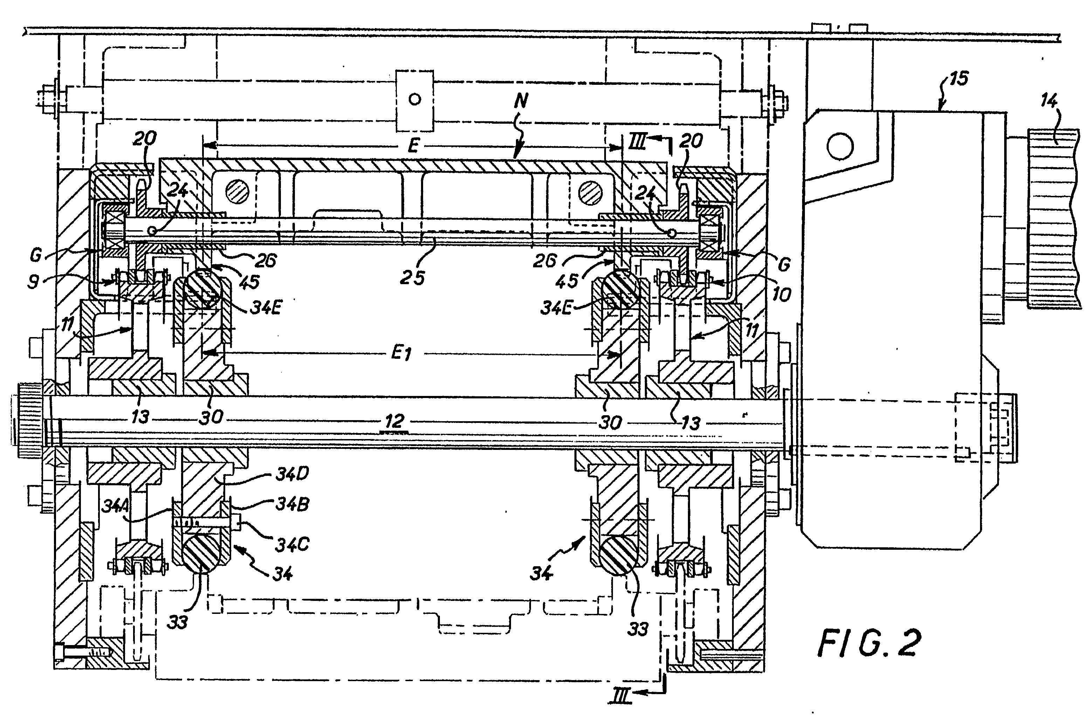

Suivant une forme de réalisation préférentielle illustrée aux figures 1 à 3 le convoyeur du genre à accumulation comprend sur un bâti 8, deux chaînes de traction parallèles et écartées l'une de l'autre 9, 10, passant sur des tambours dentés d'extrémité 11 calés sur un arbre 12 au moyen de bagues de blocage 13. Les chaînes de traction précitées 9, 10, sont mues de façon classique, par au moteur 14 avec réducteur 15, et elles sont adaptées à entraîner une pluralité de navettes indiquées globalement par N.

Dans ce genre de convoyeur, les navettes N sont immobilisées en des emplacements appropriés à l'aide de dispositifs d'arrêt qui ne seront pas décrits en détail du fait qu'ils ne font pas partie de la présente invention.

Il sera néanmoins précisé que les navettes N comportent sur chaque côté latéral une paire de roues dentées 20, 21, aptes à engrener, chaque paire, avec une chaîne de traction ; les paires de roues dentées en cause 20, 21, sont calées à l'aide d'une goupille 24 avec un arbre transversal 25 qui est monté librement rotatif à frottement doux dans les paliers 26 portés par la navette.

Chaque arbre transversal 25, à ses extrémités respectives, reçoit un galet G librement rotatif roulant dans un chemin de roulement 27 comprenant une piste extérieure 27A et une piste intérierue 27B.

Une telle disposition conduit, le long des tronçons rectilignes 27 du convoyeur à un entraînement des navettes, tout en permettant leur immobilisation sans qu'il soit nécessaire de stopper le cheminement des chaînes de traction.

En effet, si une navette est stoppée on comprend que les chaînes de traction 9, 10, continuent de cheminer en entraînant en rotation les paires de roues dentées 20, 21, lorsque la liberté est rendue à la navette N, celle-ci est à mouveau entraînée par les chaînes de traction 9, 10, par son poids propre.

Aux extrémités semi-circulaires, il est indispensable d'équiper le convoyeur avec des moyens d'entraînement additionnels faute de quoi les navettes N ne pourraient cheminer étant donné les dispositions décrites ce-dessus.

On a donc déjà proposé d'équiper les zones d'extrémité semi-circulaires avec des moyens de chaînes avec lesquelles les paires de roues dentées 20, 21, engrènent donnant ainsi lieu à un entraînement positif avec les inconvénients que cela comporte comme explicité plus avant.

Conformément à l'invention, chaque zone d'extrémité semi-circulaire est équipée pour permettre un entraînement positif des navettes tout en offrant la possibilité d'arrêts si besoin est.

Les deux extrémités du convoyeur présentant une construction sensiblement similaire, une seule sera décrite dans ce qui suit, l'extrémité décrite étant celle comportant le moteur d'entraînement avec son réducteur, les tambours dentés. L'arbre transversal 12 déjà cité porte par l'intermédiare de coussinets 30 une paire de supports formant chacun une roue à gorge 34 pour la réception d'un anneau de contact 33 en un quelconque matériau par exemple synthétique semi-rigide.

Chacune des roues à gorge précitées 34, est, voisine des tambours dentés et, selon une forme de réalisation préférée elle est constituée de deux flasques 34A, 34B, assemblés par vis 34C à un corps central 34D en déterminant une gorge sensiblement semi-circulaire 34E dans laquelle l'anneau de contact 33 en matériau synthétique semi-rigide est inséré, ledit anneau ayant une partie de sa périphérie en saillie par rapport au bord circulaire externe des deux flasques 34A, 34B.

A titre d'ordre de grandeur, l'anneau déborde à peu près du quart de son diamètre au-delà des bords circulaires précités.

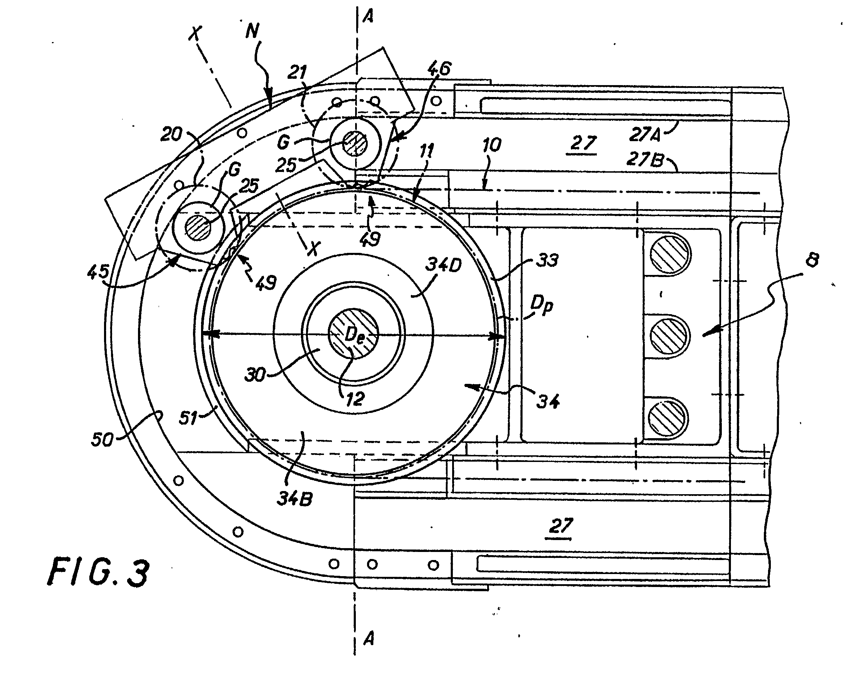

Quant aux navettes N elles comportent, chacune, sur leur sous-faces, de part et d'autre d'un plan de symétrie X–X transversal par rapport à la direction de déplacement des navettes N (figure 3) une première paire de patins 45, et une seconde paire de patins 46 qui sont donc espacés longitudinalement, suivant ladite direction de déplacement, et transversalement, avec un entr'axe E en correspondance avec l'entr'axe E1 formé par les anneaux de contact 33, les paires de patins étant en fait constitués par des bossages saillants.

Les bossages précités présentent (voir en particulier à la figure 3) une surface terminale libre sensiblement en secteur de cercle 49 crénelé suivant une direction transversale, ceci afin de favoriser l'adhérence avec l'anneau.

En combinaison avec des navettes ainsi aménagées, et avec les supports d'anneau de contact 33, les extrémités semi-circulaires des chemins de roulement 27, c'est-à-dire les parties semi-circulaires situées au-delà d'un plan passant par la ligne A–A à la figure 3, sont dotées dans le prolongement de la piste extérieure 27A, d'une piste 50 formant une butée et un chemin de roulement aux galets G support des navettes, tandis que la piste intérieure 27B est interrompue en partie après le plan précité A–A, et reprise par la présence d'un secteur circulaire de guidage 51.

On notera que le diamètre primitif Dp des tambours dentés d'extrémité 11 est un peu inférieur au diamètre extérieur De des anneaux de contact 33.

En fonctionnement, lorsqu'une navette N attaque un secteur d'extrémité semi-circulaire, les paires de roues dentées 20, 21 sont toujours en prise avec les chaînes de traction 9, 10, mais dès le passage de la première paire de bossages 45, au-delà du plan A–A, cette première paire de bossage repousse sensiblement radialement la navette N en sorte que les galets G qu'elle comporte se trouvent en butée sur les pistes 20, tandis que, grâce à la déformation élastique possible des anneaux de contact 33, les paires de bossages 45, 46, viennent l'un après l'autre en prise avec ceux-ci. Il s'ensuit un entraînement positif des navettes N dans les sections semi-circulaires qu'il s'agisse de l'entraînement dans un sens descendant (tel que montré à la figure 3) ou d'un sens remontant qui est celui de l'autre extrémité du convoyeur.

Mais, dans l'éventualité où une navette N rencontrerait un quelconque obstacle tout au long de son parcours semi-circulaire, et que cet obstacle offre une résistance supérieure à un seuil déterminé, l'entraînement positif est annulé et la navette N immobilisée.

Un tel résultat est obtenu par le fait que la friction anneaux de contact 33-bossages 45 et galets G-piste 50 n'est pas suffisante eu égard à la résistance que rencontre la navette, en sorte que les anneaux patinent sur les patins sans pour autant provoquer une usure excessive de ceux-ci, et sans pour autant que la navette N ne recule.

Un opérateur peut alors intervenir et agir pour rétablir un fonctionnement normal.

Il sera de plus observé, pour ce qui concerne les anneaux de contact 33 que ceux-ci peuvent être pleins, creux, et gonflables, en matière synthétique, en caoutchouc dur, etc...

De plus, le support d'anneaux pourrait être aménagé pour porter une série d'anneaux parallèles, tandis que les bossages 45, 46, aménagés en sous-face seraient disposés en correspondance.

Comme indiqué précédemment, chaque navette N supporte en rotation deux arbres transversaux 25 sur lesquels sont respectivement calées deux paires de roues dentées 20,21 qui engrènent les chaînes de traction 9, 10, et à chaque extrémité, chaque arbre transversal 25 supporte en rotation un galet G, le diamètre de ces galets étant inférieur à celui des roues dentées 20,21. Chaque galet G roule le long d'un chemin de roulement comprenant une piste extérieure 27A et une piste intérieure 27B définies sur chaque tronçon rectiligne du bâti 8 du convoyeur.

Selon une autre caractéristique de l'invention, chaque tronçon rectiligne du convoyeur est constitué par un tronçon de profilé 50 qui définit non seulement un chemin de roulement pour les galets G des navettes N, mais également un chemin de guidage pour les chaînes de traction 9, 10.

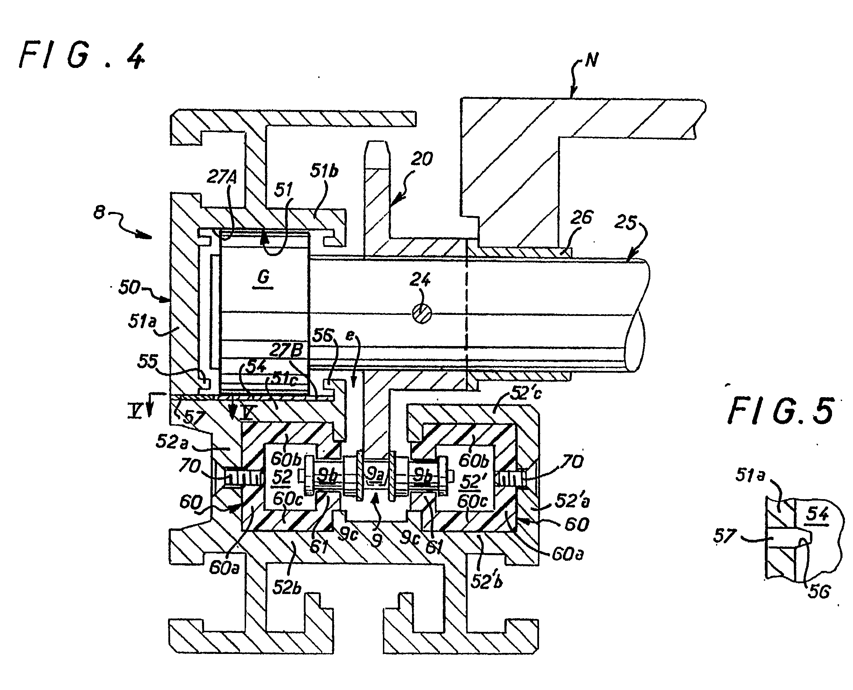

En référence à la figure 4, chaque tronçon de profilé 50 du bâti 8 présente au moins un logement 51 pour recevoir les galets G et deux logements 52, 52', en regard l'un de l'autre, dans lesquels sont montés des éléments de guidage 60 pour les chaînes de traction 9, 10.

Le logement 51 est délimité par trois parois du tronçon de profilé 50 : une paroi latérale rectiligne 51a s'étendant perpendiculairement aux arbres 25 des navettes N, et deux parois longitudinales rectilignes 51b, 51c qui prolongent à 90°, et d'un même côté, les deux bords longitudinaux de la paroi latérale 51a, respectivement.

Le logement 52 est délimité par trois parois du tronçon de profilé 50 : une paroi latérale rectiligne 52a sensiblement dans le prolongement de la paroi 51a du logement 51, une paroi longitudinale rectiligne constituée par la paroi 51c du logement 51, et une paroi longitudinale rectiligne 52b s'étendant parallèlement à la paroi 51c et d'un même côté que celle-ci par rapport aux parois latérales 51a, 52a.

Le logement 52' est délimité par trois parois du tronçon de profilé 50 : une parois longitudinale rectiligne 52'b qui prolonge la paroi longitudinale 52b du logement 52, une paroi latérale rectiligne 52'a qui prolonge à 90° le bord d'extrémité libre de la paroi 52'b parallèlement et en regard de la paroi latérale 52a, et une paroi longitudinale rectiligne 52'c sensiblement coplanaire avec la paroi 51c séparant les deux logements 51, 52 et qui prolonge à 90° le bord d'extrémité libre de la paroi latérale 52'a, en direction de la paroi 51c. Entre les bords d'extrémité libre des parois longitudinales 51c, 52'c, est défini un espace e pour le libre passage des roues dentées 20,21.

Les surfaces internes des parois longitudinales 51b, 51c du logement 51 forment les pistes de roulement 27A, 27B précitées, respectivement.

Avantageusement, lorsque le convoyeur est notamment situé dans un plan sensiblement horizontal, la surface interne de la paroi longitudinale 51c de chaque tronçon de profilé supporte le poids des navettes N par l'intermédiaire des galets G, cette surface interne est recouverte d'un revêtement anti-usure 54 constitué par une bande métallique telle qu'un feuillard par exemple.

Cette bande 54 est glissée, à une extrémité du tronçon de profilé 50, entre la surface interne de la paroi 51c et deux nervures latérales parallèles 55,56. La nervure 55 intégrée au tronçon de profilé 50 est située sur la paroi latérale 51a du logement 50, et la nervure 56 est constituée par un rebord prévu sur le côté longitudinal libre de la paroi 51c. Pour immobiliser dans le sens longitudinal la bande 54, celle-ci présente plusieurs encoches 56 sur son côté longitudinal adjacent à la paroi 51a du logement 51, comme illustré schématiquement à la figure 5. Des moyens de blocage tels que des taquets 57 sont introduits au travers de passages prévus dans la paroi latérale 51a et engagés par leur extrémité dans les encoches 56.

Lorsque les navettes N sont assemblées sur le convoyeur avec les galets G situés dans les logements 51 de deux tronçons de profilé 50 parallèles, coplanaires et solidaires du bâti 8, les roues dentées 20, 21 associées à chaque navette N font saillie à travers l'espace e délimité entre les deux logements 52, 52' de chaque tronçon de profilé 50 pour venir coopérer avec la chaîne de traction 9 qui passe dans cet espace e.

Des éléments de guidage 60 de chaîne sont montés dans les logements 52,52'. Chaque élément de guidage 60 est constitué par un tronçon de profilé en matière synthétique telle que du polystyrène par exemple.

Chaque tronçon de guidage 60 présente une section transversale sensiblement en forme de C avec une paroi latérale 60a et deux parois longitudinales 60c et 60b qui s'étendent perpendiculairement et d'un même côté de la paroid latérale 60a. Les faces extérieures des parois 60a, 60b and 60c de chaque tronçon de guidage 60 viennent respectivement en contact avec les faces intérieures des parois 52a, 51c, 52b du logement 52 et 52'a, 52'b, 52'c du logement 52'. Les tronçons de guidage 60 sont maintenus en place au moyen de vis 70 qui traversent des passages prévus dans les parois latérales 52a et 52'a des tronçons de profilé 50.

Les extrémités libres des bords longitudinaux 60b, 60c de chaque tronçon de guidage 60 présentent respectivement deux rebords internes 61 en regard l'un de l'autre.

Chaque tronçon de guidage 60 introduit librement dans les logements 52, 52' d'un tronçon de profilé 50 est maintenu en place au moyen de vis 70 montées dans des passages prévus au travers des parois latérales 52a, 52'a.

Dans l'exemple illustré à la figure 4, chaque chaîne de traction 9, 10 est un chaîne de type à rouleaux multiples, et plus précisément une chaîne triple, connue en soi, comprenant une chaîne centrale 9a et deux chaînes latérales 9b.

Les dents des roues dentées 20,21 engrènent la chaîne centrale 9a, alors que les chaînes latérales 9b sont positionnées de manière à ce que leurs rouleaux 9c viennent sensiblement en contact avec les surfaces d'extrémité des rebords 61 des tronçons de guidage 60, les maillons des chaînes, latérales 9b venant respectivement de part et d'autre des rebords de guidage 61.

Bien entendu l'invention n'est pas limitée à la forme d'exécution choisie et représentée laquelle est susceptible de diverses modifications sans pour autant sortir du cadre de l'invention qui est définie par les revendications. Il est possible, notamment dans le cas de convoyeurs légers, de prévoir une unique chaîne de traction centrale avec des anneaux latéraux.

## Revendications

1. Convoyeur à accumulation du genre comportant une pluralité de navettes (N) entraînées au moyen d'au moins une chaîne de traction sans fin (9–10) s'enroulant sur des tambours d'extrémité dentés, les navettes (N) étant équipées d'une première paire et d'une seconde paire de roues dentées montées chacune libres en rotation sur un arbre transversal et aptes à engrener avec lesdites chaînes de traction (9–10), et de galets (G) pour leur support par coopération avec des chemins de roulement (27) prévus à cet effet, lesdites navettes étant aussi, le long des tronçons rectilignes du convoyeur, immobilisables à volonté, tandis que dans les zones d'extrémité semi-circulaires des moyens additionnels sont prévus pour entraîner positivement les navettes, caractérisé en ce que lesdites moyens additionnels résultent de ce que chaque navette (N) est équipée sur sa sous-face de moyens de patins (45, 46) qui, par réaction des galets (G) amenés en butée sur une piste (50), sont aptes à exercer un effort de pression sur au moins un anneau de contact (33) élastiquement déformable monté sur un support annulaire (34) rotatif dont l'axe de rotation (12) est commun à celui du tambour d'extrémité denté correspondant, et en ce que chaque navette (N) comporte sur sa sous-face une première et une seconde paire de bossages saillants (45, 46) disposés de part et d'autre d'un plan de symétrie (X–X) transversal par rapport à la direction de déplacement des navettes (N), lesdites paires de bossages constituant ses moyens de patins.

2. Convoyeur selon la revendication 1, caractérisé en ce que la surface terminale libre (49) des paires de bossages (45, 46) est crénelée avec des angles arrondis.

3. Convoyeur selon l'une quelconque des revendications précédentes, caractérisé en ce que les paires de bossages (45, 46) sont espacés longitudinalement suivant la direction de déplacement des navettes (N), en ayant leurs surfaces terminales (49) en secteur de cercle avec un centre commun et un rayon sensiblement égal à celui des anneaux (33).

4. Convoyeur selon l'une quelconque des revendications précédentes, caractérisé en ce qu'un support (34) pour au moins un anneau (33) est prévu au voisinage des deux chaînes de traction (8–9) s'enroulant sur les tambours d'extrémité dentés (11).

5. Convoyeur selon l'une quelconque des revendications précédentes, caractérisé en ce que les secteurs d'extrémité semi-circulaires sont équipés chacun d'une piste (50) propre à former une butée et un chemin de roulement aux galets (G) des navettes (N).

6. Convoyeur selon l'une quelconque des revendications précédentes, caractérisé en ce que l'anneau de contact (33) est un élément plein semi-rigide.

7. Convoyeur selon l'une quelconque des revendications précédentes, caractérisé en ce que l'anneau de contact (33) est un élément tubulaire semi-rigide.

8. Convoyeur selon la revendication 7, caractérisé en ce que l'anneau de contact (33) est gonflable.

9. Convoyeur selon l'une quelconque des revendications précédentes, caractérisé en ce que l'anneau de contact (33) est en matériau synthétique.

10. Convoyeur selon l'une quelconque des revendications précédentes, caractérisé en ce que le support (34) de l'anneau de contact (33) comporte une gorge sensiblement semi-circulaire (34E) dans laquelle ledit anneau (33) est en partie emboîté.

11. Convoyeur selon l'une quelconque des revendications précédentes, caractérisé en ce que les galets (G) de guidage et les paires de roues dentées (20, 21) de chaque navette (N) sont montées sur un arbre commun (25).

12. Convoyeur selon l'une quelconque des revendications précédentes, caractérisé en ce que chaque tronçon rectiligne du convoyeur est constitué par un tronçon de profilé (50) qui délimite, d'une part, le chemin de roulement (27) précité pour les galets (G) des navettes (N) et, d'autre part, un chemin de guidage (61) pour l'une des chaînes de traction (9, 10).

13. Convoyeur selon la revendication 12, caractérisé en ce que chaque tronçon de profilé (50) présente un premier logement (51) s'étendant sur la longueur du profilé et délimité par deux parois longitudinales parallèles (51bi, 51c) et une paroi latérale (51a) reliant deux bords longitudinaux adjacents desdites parois (51b, 51c), les faces internes des parois longitudinales formant les deux pistes (27A, 27B) du chemin de roulement (27).

14. Convoyeur selon la revendication 13, caractérisé en ce que la face interne de la paroi longitudinale (51c) qui supporte le poids des navettes (N) par l'intermédiaire des galets (G) est revêtue d'un revêtement antiusure (54) sous forme de bande.

15. Convoyeur selon la revendication 14, caractérisé en ce que le revêtement anti-usure (54) est constitué par une bande de feuillard.

16. Convoyeur selon l'une quelconque des revendications 14, 15, caractérisé en ce que la bande (54) possède au moins une encoche (56) sur son côté adjacent à la paroi latérale (51a) du logement (51) dans laquelle pénètre un taquet de fixation (57) monté au travers de ladite paroi latérale (51a).

17. Convoyeur selon l'une quelconque des revendications 12 à 16, caractérisé en ce que chaque tronçon de profilé (50) présente deux logements supplémentaires (52, 52') en regard l'un de l'autre, s'étendant sur la longueur du profilé, espacés l'un de l'autre par un espace (e) pour le libre passage des roues dentées (20, 21) des navettes (N) et d'une chaîne de traction (9, 10), ouverts au niveau de leurs parois en regard l'une de l'autre, et dans lesquels sont logés des moyens de guidage (60) de ladite chaîne de traction (9, 10).

18. Convoyeur selon la revendication 17, caractérisé en ce que les moyens de guidage (60) sont constitués par des tronçons de profilé présentant une paroi latérale (60a) et deux parois longitudinales (60b, 60c) ayant respectivement deux rebords (61) dirigés l'un vers l'autre et dont les surfaces d'extrémité forment ledit chemin de guidage pour la chaîne de traction associée (9, 10).

19. Convoyeur selon la revendication 18, caractérisé en ce que les faces externes des parois de chaque tronçon de profilé des moyens de guidage (60) sont respectivement en contact avec les faces internes des parois du logement (52, 52') associé, les rebords (61) de chaque tronçon de profilé se situant au niveau de la face ouverte du logement (52, 52') associé.

20. Convoyeur selon la revendication 19, caractérisé en ce que les chaînes de traction (9, 10) sont des chaînes triples, la chaîne centrale (9a) engrenant avec les roues dentées (20, 21) des navettes (N) et les rouleaux des chaînes latérales (9b) venant sensiblement en contact avec les surfaces d'extrémité des rebords (61) du tronçon de profilé associé des moyens de guidage (60).

**Claims**

1. An accumulation conveyor of the type comprising a plurality of shuttles (N) driven by at least one endless drive chain (9–10) passing over end sprocket wheels, the shuttles (N) being provided with a first pair and a second pair of toothed wheels, each of which is mounted to rotate freely on a transverse shaft and which can engage with said drive chains (9–10), and with rollers (G) for supporting them in co-operation with roller paths (27) provided for this purpose, it also being possible for said shuttles to be fixed in position as desired along straight sections of the conveyor, whereas in the semicircular end zones additional means are provided for positively driving the shuttles, characterised in that as a result of said additional means each shuttle (N) is provided on its undersurface with shoe means (45, 46) which, as a result of the rollers (G) coming into abutment with a track (50), can exert a pressure on at least one elastically deformable contact ring (33) mounted on a rotating annular support (34), whose axis of rotation (12) is common to that of the corresponding end sprocket wheel, and in that on its undersurface each shuttle (N) comprises a first and second pair of projecting bosses (45, 46) arranged on either side of plane of symmetry (X–X) extending transversely in relation to the direction of movement of the shuttles (N), said pairs of bosses forming its shoe means.

2. A conveyor according to claim 1, characterised in that the free end surface (49) of the pairs of bosses is notched with round angles.

3. A conveyor according to any one of the preceding claims, characterised in that the pairs of bosses (45, 46) are spaced apart longitudinally in the direction of movement of the shuttles (N), their end surfaces (49) being of the shape of a sector of a circle with a common centre and a radius substantially equal to that of the rings (33).

4. A conveyor according to any one of the preceding claims, characterised in that a support (34) for at least one ring (33) is provided in the vicinity of the two drive chains (8–9) [sic] passing over the end sprocket wheels (11).

5. A conveyor according to any one of the preceding claims, characterised in that the semicircular end sectors are each provided with a track (50) intended to form a stop member and a roller path for the rollers (6) of the shuttles (N).

6. A conveyor according to any one of the preceding claims, characterised in that the contact ring (33) is a solid semi-rigid member.

7. A conveyor according to any one of the preceding claims, characterised in that the contact ring (33) is a semi-rigid tubular member.

8. A conveyor according to claim 7, characterised in that the contact ring (33) is inflatable.

9. A conveyor according to any one of the preceding claims, characterised in that the contact ring (33) is of synthetic material.

10. A conveyor according to any one of the preceding claims, characterised in that the support (34) for the contact ring (33) comprises a substantially semicircular groove (34E) in which said ring (33) is partly enclosed.

11. A conveyor according to any one of the preceding claims, characterised in that the guide rollers (G) and the pairs of toothed wheels (20, 21) of each shuttle (N) are mounted on a common shaft (25).

12. A conveyor according to any one of the preceding claims, characterised in that each straight section of the conveyor comprises a profiled section (50) which, on the one hand, defines the aforementioned roller path (27) for the rollers (G) of the shuttles (N) and, on the other hand, a guide path (61) for one of the drive chains (9, 10).

13. A conveyor according to claim 12, characterised in that each profiled section (50) has a first seating (51) extending along the length of the profiled member and bounded by two parallel longitudinal walls (51b, 51c) and a side wall (51a) connecting two adjacent longitudinal edges of said walls (51b, 51c), the inner surfaces of the longitudinal walls forming the two tracks (27A, 27B) of the roller path (27).

14. A conveyor according to claim 13, characterised in that the inner surface of the longitudinal wall (51c) which bears the weight of the shuttles (N) via the rollers (G) is covered with an anti-wear lining (54) in the form of a strip.

15. A conveyor according to claim 14, characterised in that the anti-wear lining (54) comprises a band of metal strip.

16. A conveyor according to either one of claims 14 or 15, characterised in that the strip (54) has at least one slot (56) on its side adjacent the side wall (51a) of the seating (51), in which engages a locating detent (57) fitted through the side wall (51a).

17. A conveyor according to any one of claims 12 to 16, characterised in that each profiled section (50) has two mutually opposed additional seatings (52, 52′) which extend along the length of the profiled member, which are spaced apart by a distance (e) for the free passage of the toothed wheels (20, 21) of the shuttles (N) and a drive chain (9, 10), which are open at the level of their mutually opposed walls, and in which are accommodated guide means (60) for said drive chain (9, 10).

18. A conveyor according to claim 17, characterised in that the guide means (60) are formed by profiled sections having a side wall (60a) and two longitudinal walls (60b, 60c) respectively having two edges (61) directed towards one another and whose end surfaces form said guide path for the associated drive chain (9, 10).

19. A conveyor according to claim 18, characterised in that the outer surfaces of the walls of each profiled section of the guide means (60) are respectively in contact with the inner surfaces of the walls of the associated seating (52, 52′), the edges (61) of each profiled section being disposed level with the open surface of the associated seating (52, 52′).

20. A conveyor according to claim 19, characterised in that the drive chains (9, 10) are triple chains, the centre chain (9a) engaging with the toothed wheels (20, 21) of the shuttles (N) and the rollers of the lateral chains (9b) coming substantially into contact with the end surfaces of the edges (61) of the associated profiled section of the guide means (60).

**Patentansprüche**

1. Stauförderer, mit einer Vielzahl von Platten (N), die mittels zumindest einer über Zahntrommeln laufenden Endloszugkette (9–10) angetrieben werden und mit einem ersten und mit einem zweiten Zahnradpaar ausgestattet sind, die jeweils drehfrei auf einer Querwelle angeordnet und ausgebildet sind, in die genannten Zugketten (9–10) einzugreifen, und mit sie tragenden Rollen, die mit zu diesem Zweck vorgesehenen Schienen (27) zusammenwirken, wobei die Platten entlang geradliniger Abschnitte des Förderers wahlweise stillstehen können, während in den halbkreisförmigen Endabschnitten zusätzliche Mittel zum formschlüssigen Antrieb der Platten vorgesehen sind, dadurch gekennzeichnet, daß die zusätzlichen Mittel sich daraus ergeben, daß jede Platte (N) auf ihrer Unterseite mit Kufenmitteln (45, 46) ausgerüstet sind, die durch Reaktion der in der Bahn (50) zum Anschlagen gebrachten Rollen (G) eine Druckwirkung auf zumindest einen elastisch verformbaren Kontaktring (33) ausüben können, der auf einem ringförmigen drehbaren Träger (34) angeordnet ist, dessen Drehachse (12) gleich ist mit derjenigen der zugeordneten Zahntrommel, und daß jede Platte (N) auf seiner unteren Seite ein erstes und ein zweites Paar Vorsprünge (45, 46) aufweist, die zu beiden Seiten einer Symmetrieebene (X–X) angeordnet sind, die bezüglich der Verschiebungsrichtung der Platten (N) quer angeordnet ist, wobei diese Vorsprünge die genannten Kufenmittel bilden.

2. Förderer nach Anspruch 1, dadurch gekennzeichnet, daß die freie Endoberfläche (49) der Vorsprungpaare (45, 46) gezackt mit abgerundeten Winkeln ausgebildet ist.

3.. Förderer nach einem der vorangegangenen Ansprüche, dadurch gekennzeichnet, daß die Vorsprungspaare (45, 46) längs der Verschiebungsrichtung der Platten (N) einen Abstand voneinander aufweisen, wobei ihre Endflächen (49) einen Kreisbogen mit einem gemeinsamen Mittelpunkt und einem Radius aufweisen, der im wesentlichen gleich ist mit demjenigen des Rings (33).

4. Förderer nach einem beliebigen der vorangegangenen Ansprüche, dadurch gekennzeichnet, daß ein Träger (34) für mindestens einen Ring (33) neben den beiden Zugketten (8–9) vorgesehen ist, die über die Zahntrommeln (11) laufen.

5. Förderer nach einem beliebigen der vorangegangenen Ansprüche, dadurch gekennzeichnet, daß die halbkreisförmigen Endabschnitte jeweils mit einer Bahn (50) ausgestattet sind, die einen Anschlag und eine Schiene für die Rollen (G) der Platten (N) bildet.

6. Förderer nach einem beliebigen der vorangegangenen Ansprüche, dadurch gekennzeichnet, daß der Kontaktring (33) ein massives halbstarres Element ist.

7. Förderer nach einem beliebigen der vorangegangenen Ansprüche, dadurch gekennzeichnet, daß der Kontaktring (33) ein rohrförmiges halbstarres Element ist.

8. Förderer nach Anspruch 7, dadurch gekennzeichnet, daß der Kontaktring (33) aufblasbar ist.

9. Förderer nach einem beliebigen der vorangegangenen Ansprüche, dadurch gekennzeichnet, daß der Kontaktring (33) aus synthetischem Material hergestellt ist.

10. Förderer nach einem beliebigen der vorangegangenen Ansprüche dadurch gekennzeichnet, daß der Träger (34) des Kontaktrings (33) eine im wesentlichen halbkreisförmige Nut (34E) aufweist, in welcher der Ring (33) zum Teil umschlossen ist.

11. Förderer nach einem beliebigen der vorangegangenen Ansprüche, dadurch gekennzeichnet, daß die Rollen (G) und die Zahnradpaare (20, 21) jeder Platte (N) auf einer gemeinsamen Welle (25) angeordnet sind.

12. Förderer nach einem beliebigen der vorangegangenen Ansprüche, dadurch gekennzeichnet, daß jedes geradlinige Teilstück des Förderers von einem Profilteilstück (50) gebildet wird, das zum einen die oben genannte Schiene (27) für die Rollen (G) der Platten (N) und zum anderen einen Führungsweg (61) für eine der Zugketten (9, 10) begrenzt.

13. Förderer nach Anspruch 12, dadurch gekennzeichnet, daß jedes Profilteilstück (50) eine erste Aufnahme (51), die sich über die Länge des Profils erstreckt und durch zwei parallele Längswände (51bi, 51c) begrenzt ist und eine Seitenwand (51a) aufweist, welche zwei neben den genannten Wänden (51b, 51c) in Längsrichtung verlaufende Ränder miteinander verbindet, wobei die Innenflächen der Längswände zwei Rollwege (27A, 27B) der Schiene (27) bilden.

14. Förderer nach Anspruch 13, dadurch gekennzeichnet, daß die Innenfläche der Längswand (51c), die das Gewicht der Platten (N) unter Zwischenschaltung der Rollen (G) trägt, mit einer in Form eines Bandes ausgebildeten verschleißfesten Auskleidung beschichtet ist.

15. Förderer nach Anspruch 14, dadurch gekennzeichnet, · daß die verschleißfeste Beschichtung (54) von einem Stahlband gebildet wird.

16. Förderer nach einem beliebigen der Ansprüche (14, 15) dadurch gekennzeichnet, daß das Band (54) zumindest eine Einkerbung (56) an seiner der Seitenwand (51a) der Aufnahme (51) zugewandten Seite aufweist, in welche ein Sperrstift (57) eingreift, der quer zur Seitenwand (51a) angebracht ist.

17. Förderer nach einem beliebigen der Ansprüche 12 bis 16, dadurch gekennzeichnet, daß das Profilteilstück (50) einander gegenüberliegend zwei zusätzliche Aufnahmen (52, 52') aufweist, die sich über die Länge der Profilierung hinwegerstrecken und voneinander einen Abstand (e) für den freien Durchgang der Zahnräder (20, 21) der Platte (N) und der Zugkette (9, 10) voneinander aufweisen, und die an ihren einander zugewandten Wänden offen sind, wobei in ihnen Führungsmittel (60) der Zugkette (9, 10) aufgenommen sind.

18. Förderer nach Anspruch 17, dadurch gekennzeichnet, daß die Führungsmittel (60) von Profilstücken gebildet werden, die eine Seitenwand (60a) und zwei Längswände (60b, 60c) aufweisen und jeweils zwei Ränder (61), die einander zugewandt sind, besitzen, und deren Endfläche den genannten Führungsweg für die zugeordnete Zugkette (9, 10) bilden.

19. Förderer nach Anspruch 18, dadurch gekennzeichnet, daß die Endflächen der Wände jedes Profilstücks der Führungsmittel (60) jeweils in Kontakt mit Innenflächen der Wände der Aufnahmen (52, 52') stehen, wobei die Ränder (61) jedes Profilstücks sich auf dem Niveau der offenen Flächen der zugeordneten Aufnahme (52, 52') befinden.

20. Förderer nach Anspruch 19, dadurch gekennzeichnet, daß die Zugketten (9, 10) Dreifachketten sind, wobei die Zentralketten (9a) mit den Zahnrädern (20, 21) der Platten (N) zusammenwirkt und die Walzen der seitlichen Ketten (9b) im wesentlichen in Kontakt mit den Außenflächen der Ränder (61) der den Führungsmitteln (60) zugeordneten profilierten Abschnitte treten.

FIG.1

EP 0 256 926 B1

FIG.2

FIG.3

EP 0 256 926 B1

# FIG.4

# FIG.5

EP 0 256 926 B1